# EUROPÄISCHE PATENTSCHRIFT

(11) **EP 0 799 663 B1**
(45) Veröffentlichungstag und Bekanntmachung des Hinweises auf die Patenterteilung: **07.07.1999**
(21) Anmeldenummer: 97105439.0
(22) Anmeldetag: 02.04.1997
(51) Int. Cl.: B23B 29/24

(54) **Werkzeugrevolver, insbesondere für Drehmaschinen**
Tool revolver specially for lathes
Tourelle porte-outil spécialement pour tours

(30) Priorität: 03.04.1996 DE 19613377
(43) Veröffentlichungstag der Anmeldung: 08.10.1997
(73) Patentinhaber: Traub Drehmaschinen GmbH, 73262 Reichenbach (DE)
(72) Erfinder: Baumann, Ulrich, 73252 Lenningen (DE)
(74) Vertreter: Goetz, Rupert, Dipl.-Ing.

(56) Entgegenhaltungen:
- DE-A- 3 723 967
- DE-A- 3 935 399

## Beschreibung

Die Erfindung betrifft einen Werkzeugrevolver nach dem Oberbegriff des Anspruchs 1.

Bei einem bekannten Werkzeugrevolver dieser Gattung (DE 37 23 967 A1) ist die Nabe eine kreisförmige Scheibe, an deren äußerem Rand eine schwalbenschwanzförmige Führung mit einer zylindrischen äußeren Mantelfläche und zwei radial nach innen konvergierenden kegelförmigen Stirnflächen ausgebildet ist. Die zugehörigen Werkzeughalter sind radial von außen nach innen auf die Führung aufgesteckt, so daß sie diese mit ihrem Fuß umgreifen und ihr Körper radial außerhalb der Führung angeordnet ist. Dementsprechend kann ein am Körper zu befestigendes Werkzeug ebenfalls nur in einem radial außerhalb der Führung liegenden Bereich angeordnet werden. Der Körper des Werkzeughalters weist einen seitlichen Vorsprung auf, in den eine erste Stellschraube tangential in bezug auf die Führung eingeschraubt ist. Das Ende der Stellschraube dient als Anschlag, dem ein Anschlag an der Führung zugeordnet ist. Dieser wird vom Ende einer zweiten Stellschraube gebildet, die tangential in einen an der Führung befestigten Trägerkörper eingeschraubt ist. Die Einstellbarkeit der je einem Werkzeughalter zugeordneten Anschläge ermöglicht es, bei einer beliebig großen Zahl von beispielsweise in einem Magazin bereitzuhaltenden Werkzeughaltern Ungenauigkeiten der Befestigung eines Werkzeugs in bezug auf den Körper des Werkzeughalters zu kompensieren. Die Einstellbarkeit der der Führung zugeordneten Anschläge ermöglicht es, Ungenauigkeiten in den einzelnen Schaltstellungen des Werkzeugrevolvers zu kompensieren. Mit dieser zweifachen Kompensation läßt sich erreichen, daß Werkzeuge an beliebig vielen, wahlweise an der Führung zu befestigenden Werkzeughaltern jeweils in einer bestimmten Schaltstellung des Werkzeugrevolvers eine definierte Lage, beispielsweise Höhenlage in bezug auf die Achse einer waagerechten Arbeitsspindel, einnehmen, auch wenn die einzelnen Teile des Werkzeugrevolvers sowie die Vorrichtung für dessen Schaltbewegungen mit nicht besonders hoher Genauigkeit hergestellt sind.

Gegenüber Werkzeugrevolvern mit von vorneherein unveränderbar festgelegten Positionen der einzelnen Werkzeughalter hat der bekannte gattungsgemäße Werkzeugrevolver also den Vorteil, mit geringeren Kosten herstellbar zu sein. Dem steht allerdings der Nachteil gegenüber, daß die Werkzeughalter einen in radialer Richtung verhältnismäßig großen Freiraum benötigen, und dies hat zur Folge, daß mit einem oder mehreren solchen Werkzeugrevolvern ausgestattete Werkzeugmaschinen, insbes. Drehmaschinen, entsprechend hohe Revolverschlitten benötigen und deshalb insgesamt groß sein müssen. Außerdem läßt sich der bekannte gattungsgemäße Werkzeugrevolver bei gegebenem Durchmesser seiner Führung nur mit verhältnismäßig wenigen Werkzeugrevolvern bestücken, da zu dem Platzbedarf jedes einzelnen Werkzeugrevolvers in Umfangsrichtung der Führung noch der Platzbedarf des zugehörigen, an der Führung befestigten Trägerkörpers für die zweite Anschlagschraube hinzukommt.

Der Erfindung liegt deshalb die Aufgabe zugrunde, einen Werkzeugrevolver, der die im vorstehenden beschriebene doppelte Kompensationsmöglichkeit bietet, platzsparend zu gestalten, vor allem hinsichtlich des radialen Platzbedarfs der Werkzeughalter.

Die Aufgabe ist erfindungsgemäß mit den Merkmalen des Anspruchs 1 gelöst. Vorteilhafte Weiterbildungen ergeben sich aus den Unteransprüchen.

Ein Ausführungsbespiel der Erfindung wird im folgenden anhand schematischer Zeichnungen mit weiteren Einzelheiten erläutert. Es zeigen:
- Fig.1: einen erfindungsgemäßen Werkzeugrevolver in axialer Ansicht entsprechend dem Pfeil I in Fig.2,
- Fig.2: den axialen Schnitt II-II in Fig.1,
- Fig.3: die axiale Ansicht in Richtung des Pfeils III in Fig.2,

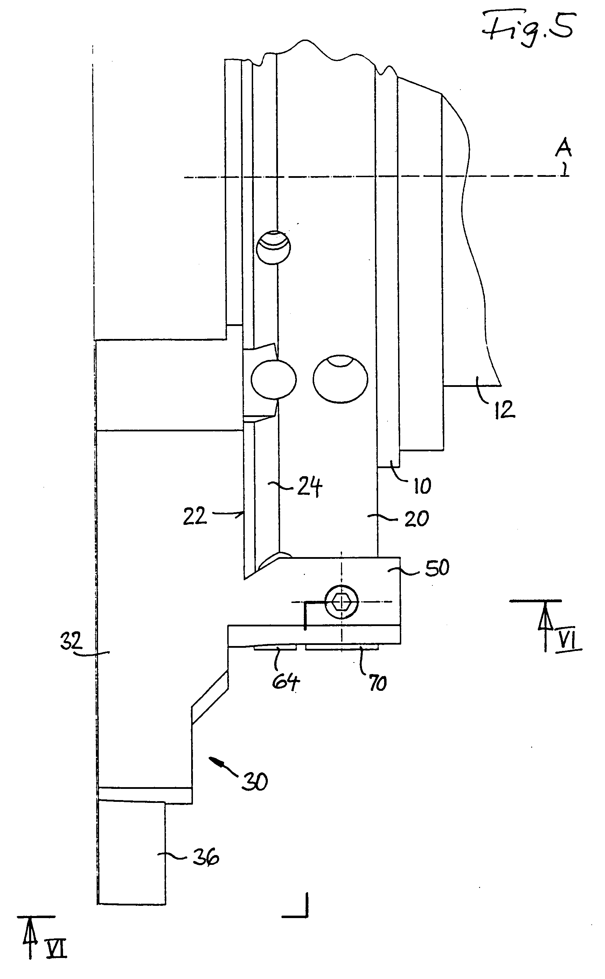

- Fig.4: einen einzelnen Werkzeughalter in radialer Ansicht gemäß Pfeil IV in Fig.3,

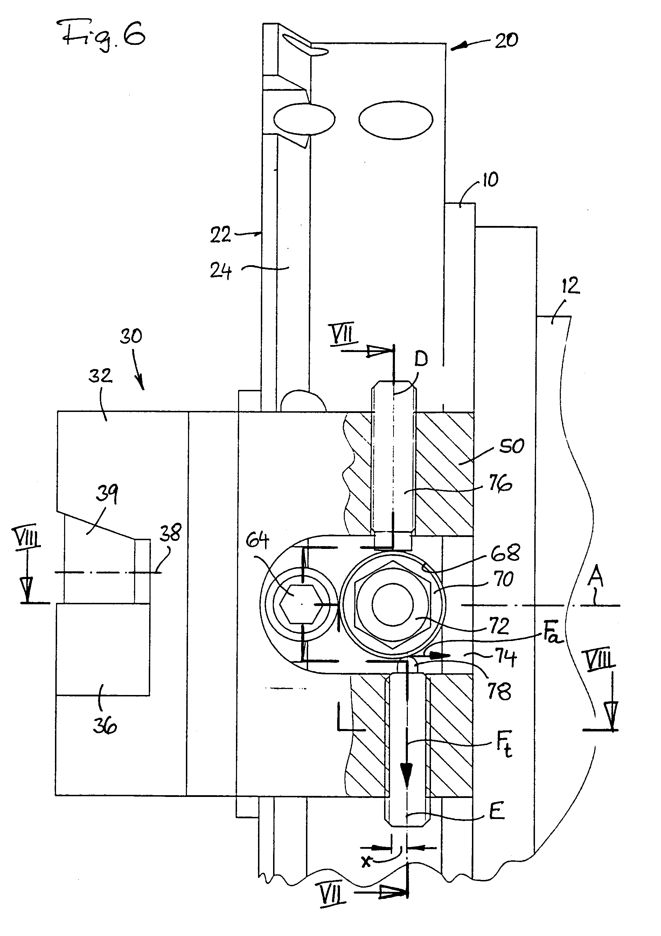

- Fig.5: eine gegenüber Fig.1 bis 4 stark vergrößerte Seitenansicht des in Fig.2 unteren Bereichs des Werkzeugsrevolvers,
- Fig.6: die teilweise als Schnitt dargestellte Ansicht VI-VI in Fig.5,

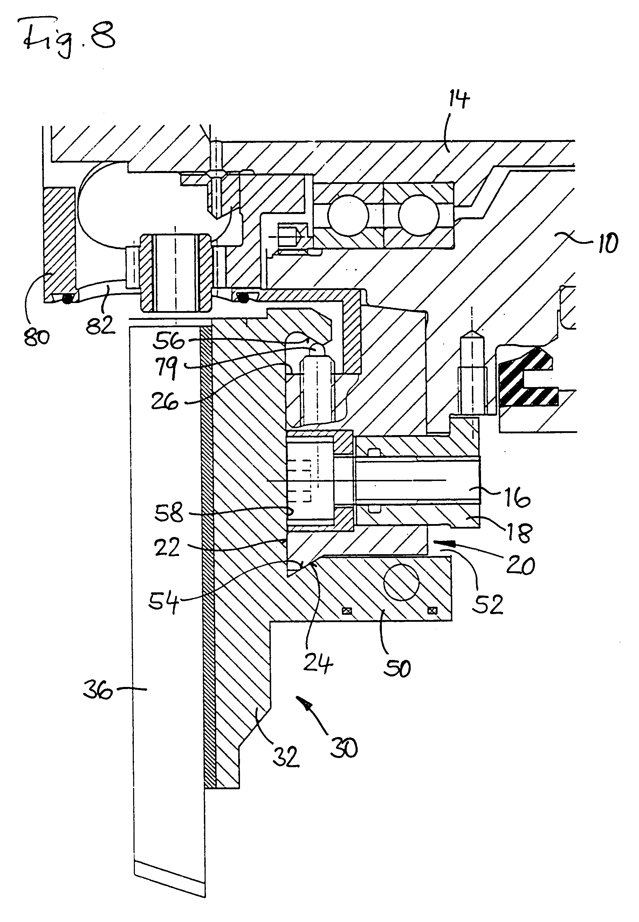

- Fig.7: den Teilschnitt VII-VII in Fig.6 und
- Fig.8: den Schnitt VIII-VIII in Fig.6.

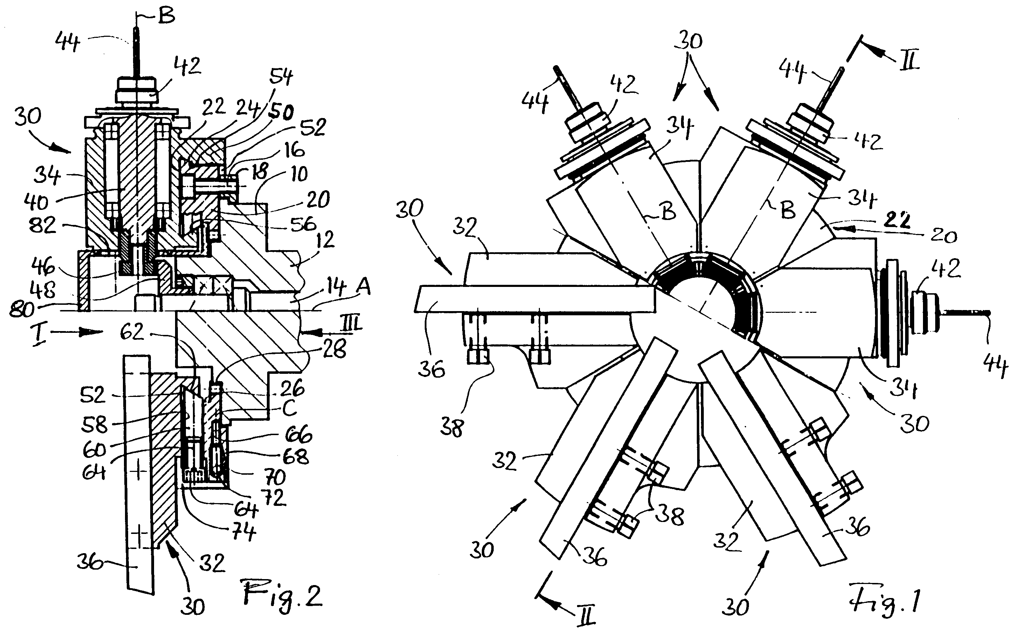

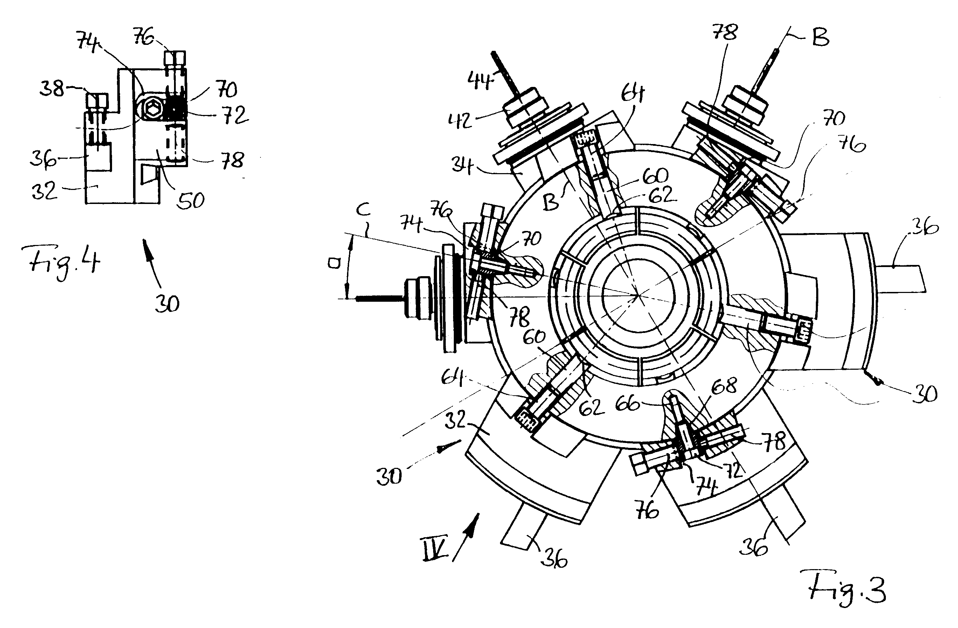

Der in Fig.1 bis 3 dargestellte Werkzeugrevolver hat eine Nabe 10, die am freien Ende einer nur angedeuteten Revolverschaltwelle 12, mit dieser einstückig, ausgebildet ist. Die Revolverschaltwelle 12 ist um ihre im folgenden als Revolverachse A bezeichnete Achse schrittweise um jeweils 60° in sechs Schaltstellungen drehbar und in jeder von ihnen mit bekannten Mitteln festsetzbar. Innerhalb der Nabe 10 ist eine Antriebswelle 14 gelagert, die sich gleichachsig mit der Revolverschaltwelle 12 durch diese hindurch erstreckt und beispielsweise synchron mit einer nicht dargestellten Hauptspindel einer Drehmaschine antreibbar ist.

An der Nabe 10 ist mittels zur Revolverachse A paralleler Schrauben 16, die in Klemmstücke 18 eingreifen, eine bezüglich der Revolverachse A zentrierte, kreisringförmige Führung 20 befestigt. Die Führung 20 hat eine freie Stirnfläche 22, die von der Nabe 10 abgewandt ist und in einer zur Revolverachse A normalen Ebene liegt, sowie eine kegelförmige, radial äußere Mantelfläche 24, deren Durchmesser mit zunehmendem Abstand von der freien Stirnfläche 22 abnimmt, und eine zylindrische, radial innere Mantelfläche 26. In einem die Revolverachse A enthaltenden Schnitt hat die Führung 20, soweit sie von den genannten Flächen 22, 24 und 26 begrenzt ist, also ein trapezförmiges Führungsprofil. An der Nabe 10 ist die Führung 20 mit einem radial inneren Zentrierrand 28 zentriert. Durch die Schrauben 16 und Klemmstücke 18 ist die Führung 20 zu gemeinsamer Drehung, jedoch leicht lösbar, mit der Habe 10 verbunden. Falls zur Drehmomentübertragung erforderlich, kann die Führung 20 mit der Nabe 10 durch zusätzliche bekannte Mittel verbunden sein, beispielsweise durch ein an ihrem Zentrierrand 28 ausgebildetes Zahn- oder Vielnutprofil, das in ein entsprechendes Profil an der Nabe 10 eingreift.

An der Führung 20 lassen sich, wie dargestellt, bis zu sechs Werkzeughalter 30 befestigen, die gegen gleichartige, beispielsweise in einem Magazin bereitgehaltene, Werkzeughalter austauschbar sind. Von den sechs dargestellten Werkzeughaltern 30 haben drei je einen im wesentlichen plattenförmigen Körper 32, während die drei übrigen Werkzeughalter je einen im wesentlichen hülsenförmigen Körper 34 aufweisen. Jeder dieser Körper 32 und 34 ist neben und parallel zur freien Stirnfläche 22 der Führung 20 radial zur Revolverachse A angeordnet.

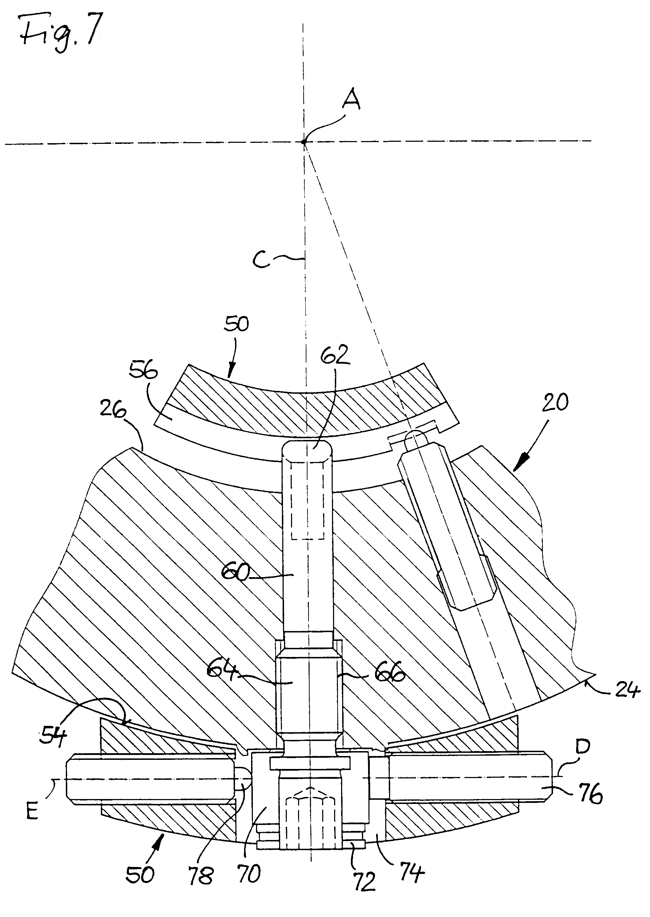

Die Körper 32 tragen je ein Drehwerkzeug 36, das sich im dargestellten Beispiel ebenfalls im wesentlichen radial zur Revolverachse A erstreckt und mittels Schrauben 38 und gemäß Fig.6 mit einem Klemmkörper 39 festgeklemmt ist. In den Körpern 34 ist je eine Spindel 40 gelagert, deren Spindelachse B im dargestellten Beispiel die Revolverachse A unter einem rechten Winkel schneidet. Am radial äußeren Ende jeder Spindel 40 ist ein Spannfutter 42 zum Einspannen eines Bohrers 44 oder sonstigen drehantreibbaren Werkzeugs oder eines Werkstücks befestigt. Am radial inneren Ende jeder Spindel 40 ist ein Ritzel 46 befestigt, das mit einem Zentralrad 48 kämmt, wenn der betreffende Werkzeughalter 30 in der dargestellten Weise an der Führung 20 befestigt ist. Das Zentralrad 48 ist an oder nahe dem freien Ende der Antriebswelle 14 befestigt und weist eine Planverzahnung auf, die eine zur Revolverachse A normale Wälzebene hat. Sämtliche Ritzel 46 sind zylindrisch und haben eine gewöhnliche Stirnverzahnung.

Zum Befestigen an der Führung 20 hat jeder Werkzeughalter 30 einen Fuß 50 mit einer schwalbenschwanzförmigen Aussparung 52, die radial nach außen durch eine konkav-konische äußere Flanke 54 und radial nach innen durch eine konvex-konische innere Flanke 56, und dazwischen durch eine zur Revolverachse A normale ebene Bodenfläche 58 begrenzt ist. In jedem der insgesamt sechs zum Befestigen eines Werkzeughalters 30 vorgesehenen Sektoren ist in der Führung 20 ein Schieber 60 radial verschiebbar geführt. Jeder der insgesamt sechs Schieber 60 hat an seinem radial inneren Ende eine Schrägfläche 62, die mittels einer auf den Schieber einwirkenden, radial außerhalb von ihm in die Führung 20 eingeschraubten radialen Schraube 64 gegen die konvexkonische innere Flanke 56 am Fuß 50 des zugehörigen Werkzeughalters 30 spannbar ist.

Jeder der Werkzeughalter 30 läßt sich bei gelöster Schraube 64 parallel zur Revolverachse A auf einen freien Sektor der Führung 20 rittlings aufstecken und durch Festziehen der Schraube 64 starr mit der Führung 20 verbinden. Dabei wird die konkavkonische äußere Flanke 54 am Fuß 50 des betreffenden Werkzeughalters 30 gegen die äußere Mantelfläche 24, und die ebene Bodenfläche 58 gegen die freie Stirnfläche 22 der Führung 20 gespannt, so daß der Werkzeughalter in einer genau definierten Stellung positioniert ist. Wenn es sich um einen Werkzeughalter 30 mit Spindel 40 handelt, gelangt deren Ritzel 46 beim Aufstecken des Werkzeughalters auf die Führung 20 und anschließenden Festziehen der zugehörigen Schraube 64 in korrekten Zahneingriff mit dem Zentralrad 48.

Damit ein Werkzeughalter 30, der auf die Führung 20 aufgesteckt worden ist, vor dem Festziehen der zugehörigen Schraube 64 nicht erst umständlich in Umfangsrichtung justiert werden muß, weist die Führung 20 in jedem ihrer sechs Sektoren eine radiale Gewindebohrung 66 auf, in deren radial äußerem Bereich ein steilkonischer Sitz 68 mit der Achse C ausgebildet ist. In diesem Sitz 68 steckt ein komplementär konisch ausgebildeter Fuß eines Exzenters 70, der mittels einer sich durch ihn hindurch erstreckenden radialen Schraube 72 in jeder gewählten Drehstellung festspannbar ist. Im Fuß 50 jedes Werkzeughalters 30 ist ein radialer Schlitz 74 ausgebildet, dessen Breite in Umfangsrichtung der Führung 20 etwas größer ist als der Durchmesser jedes der Exzenter 70. Auf einer Seite des Schlitzes 74 ist in den Fuß 50 ein Anschlag 76 in Gestalt einer tangential angeordneten Stellschraube eingeschraubt; auf der gegenüberliegenden Seite des Schlitzes 74 ist in dem Fuß 50 ein Spannkörper 78, beispielsweise ein Bolzen, geführt, der von einer Feder tangential in Richtung zum Anschlag 76 hin vorgespannt ist.

Die den Anschlag 76 bildende Stellschraube hat eine Achse D, welche die Achse C des Sitzes 68 schneidet. Der den Spannkörper 78 bildende Bolzen hat eine Achse E, die sich parallel zur Achse D erstreckt und die Achse C in einem Abstand kreuzt, ihr gegenüber also einen Achsversatz X aufweist, und zwar in Richtung von der freien Stirnfläche 22 der Führung 20 weg. Damit wird erreicht, daß der Spannkörper 78 auf den Exzenter 70 eine Spannkraft ausübt, die neben einer in bezug auf die Führung 20 tangentialen Komponente Fₜ eine zur Revolverachse A parallele Komponente Fₐ hat. Diese Komponente Fₐ trägt dazu bei, daß der Werkzeughalter 30 sich mit der ebenen Bodenfläche 58 seines Fußes 50 an die ebene Stirnfläche 22 der Führung 20 anlegt, schon bevor die Schraube 64 festgezogen wird.

Jeder Sektor der Führung 20, in dem ein Werkzeughalter 30 zu befestigen ist, enthält ferner ein radial verschiebbar geführtes Andrückelement 79, das gegen den zugehörigen Schieber 60 winkelversetzt, radial nach innen vorgespannt und beispielsweise von einem federbelasteten Bolzen gebildet ist. Das Andrückelement 79 drückt, schon ehe die Schraube 64 festgezogen wird, gegen die radial innere Flanke 56 am Fuß 50 des Werkzeughalters 30 und sorgt somit dafür, daß sich dessen radial äußere Flanke 54 an die äußere Mantelfläche 24 der Führung 20 anlegt.

Beim Aufstecken eines Werkzeughalters 30 auf einen freien Sektor der Führung 20 greift der dort angeordnete Exzenter 70 in den Schlitz 74 ein, und der Spannkörper 78 sorgt dafür, daß sich der Anschlag 76 an den Exzenter 70 anlegt. Dadurch justiert sich der betreffende Werkzeughalter 30 von selbst in Umfangsrichtung der Führung 20, so daß ein Benutzer, beispielsweise Einrichter einer Drehmaschine, oder auch ein automatischer Werkzeugwechsler, nur noch die radiale Schraube 64 festzuziehen braucht, um den Werkzeughalter 30 in seiner richtigen Position festzuklemmen. Beim Festziehen der Schraube 64 entstehen nur radiale und axiale Klemmkräfte, jedoch keine in Umfangsrich-tung; infolgedessen bleibt die Genauigkeit der Justierung mit Sicherheit erhalten.

An der Führung 20 ist nahe dem Zentrierrand 28 eine topfförmige Abdeckung 80 befestigt, die in Abständen von 60° insgesamt sechs radiale Öffnungen 62 für je eine Spindel 40 aufweist. In der gezeichneten Einbaulage umschließt die Abdeckung 80 das Zentralrad 48 und alle mit ihm kämmenden Ritzel 46. Die radialen Öffnungen 82 sind in Richtung parallel zur Revolverachse A lang genug, um axiale Bewegungen zu ermöglichen, die erforderlich sind, um einen Werkzeughalter 30 auf die Führung 20 aufzustecken oder von ihr zu trennen und dabei das Ritzel 46 mit dem Zentralrad 48 in bzw. außer Eingriff zu bringen, ohne daß die Stellung der übrigen Werkzeughalter 30 in bezug auf die Führung 20 geändert wird.

Es ist aber auch möglich, die Führung 20 samt Abdeckung 80 und allen an der Führung befestigten Werkzeughaltern 30 von der Nabe 10 zu trennen, ohne daß die Werkzeughalter 30 von der Führung 20 gelöst werden. Auf diese Weise läßt sich ein vollständiger Satz Werkzeughalter 30 zusammen mit der Führung 20 gegen einen anderen Satz Werkzeughalter samt identischer Führung mit wenigen Handgriffen austauschen.

Je sechs Werkzeughalter 30 mit plattenförmigen Körpern 32 oder mit hülsenförmigen Körpern 34 lassen sich aus einem gemeinsamen Rohling herstellen, in den die schwalbenschwanzförmigen Aussparungen 52 als gemeinsame Ringnut eingearbeitet werden, beispielsweise durch Drehen. Dabei können auch schon die radial äußeren, inneren sowie die stirnseitigen Flächen der Werkzeughalter weitgehend bearbeitet und z.B. die Schlitze 74 eingefräst werden. Der Rohling wird dann durch radiale Schnitte in sechs gleiche Teile zerteilt, die schließlich zu fertigen Werkzeughaltern 30 weiterbearbeitet werden. Auf diese Weise kann nicht nur der Hersteller sondern auch der Benutzer des Werkzeugrevolvers geeignete Werkzeughalter 30 für unterschiedliche Bedarfsfälle mit geringen Kosten herstellen.

## Patentansprüche

1. Werkzeugrevolver, insbes. für Drehmaschinen, mit
- einer Nabe (10), die um eine Revolverachse (A) in vorbestimmte Drehstellungen schaltbar ist,
- einer Führung (20), die sich kreisringförmig um die Revolverachse (A) erstreckt, ein trapezförmiges Führungsprofil aufweist und an Drehungen der Nabe (10) teilnimmt, und
- mehreren Werkzeughaltern (30), die je einen Körper (32, 34) und je einen Fuß (50) aufweisen, mit dem sie, das Führungsprofil an drei Seiten umgreifend, auf die Führung (20) aufsteckbar und dann festklemmbar sind,
- wobei jeder Werkzeughalter (30) durch ein Paar zusammenwirkende, tangential einstellbare Justierelemente, von denen eines am Werkzeughalter (30) und das andere an der Führung (20) angeordnet ist, in Umfangsrichtung justiert ist,
dadurch gekennzeichnet, daß
- die Führung (20) eine bezogen auf die Revolverachse (A) in axialer Richtung weisende freie Stirnfläche (22) und eine kegelförmige äußere Mantelfläche (24) aufweist, deren Durchmesser mit zunehmendem Abstand von ihrer freien Stirnfläche (22) abnimmt,
- die Werkzeughalter (30) in axialer Richtung auf die Führung (20) aufsteckbar sind,
- in der Führung (20) in jedem Sektor, in dem ein Werkzeughalter (30) zu befestigen ist, ein radial nach innen spannbarer Schieber (60) geführt ist, und
- der Fuß (50) jedes Werkzeughalters (30) eine schwalbenschwanzförmige Aussparung (52) aufweist, die begrenzt ist von einer konkav-konischen radial äußeren Flanke (54), die an der äußeren Mantelfläche (24) der Führung (20) anliegt, und einer konvex-konischen inneren Flanke (56), gegen die der Schieber (60) spannbar ist.

2. Werkzeugrevolver nach Anspruch 1,
dadurch gekennzeichnet, daß der Körper (32, 34) mindestens eines Werkzeughalters (30) axial neben der Führung (20) im wesentlichen radial zur Revolverachse (A) angeordnet ist.

3. Werkzeugrevolver nach Anspruch 2,
dadurch gekennzeichnet, daß
- an der Nabe (10) ein um die Revolverachse (A) drehantreibbares Zentralrad (48) gelagert ist, und
- im Körper (34) mindestens eines Werkzeughalters (30) eine zur Revolverachse (A) radiale Spindel (40) gelagert ist, die an ihrem radial inneren Ende ein Ritzel (46) aufweist, das beim axialen Aufstecken des Werkzeughalters (30) auf die Führung (20) mit dem Zentralrad (48) in Eingriff kommt.

4. Werkzeugrevolver nach Anspruch 3,
dadurch gekennzeichnet, daß die Führung (20) samt daran befestigten Werkzeughaltern (30) in axialer Richtung von der Nabe (10) lösbar ist, während das Zentralrad (48) seine Stellung in bezug auf die Nabe (10) beibehält.

5. Werkzeugrevolver nach Anspruch 4,
dadurch gekennzeichnet, daß
- mit der Führung (20) eine topfförmige Abdeckung (80) verbunden ist, die bei an der Nabe (10) befestigter Führung (20) das Zentralrad (48) umschließt, und
- jede radiale Spindel (40), die im Körper (34) eines Werkzeughalters (30) gelagert ist, sich durch eine radiale Öffnung (82) der Abdeckung (80) nach innen erstreckt, so daß ihr Ritzel (46) auch bei von der Nabe (10) abgebauter Führung (20) innerhalb der Abdeckung (80) angeordnet ist, solange der betreffende Werkzeughalter (30) an der Führung (20) befestigt ist.

6. Werkzeugrevolver nach einem der Ansprüche 1 bis 5,
dadurch gekennzeichnet daß mehrere Werkzeughalter (30) aus einem gemeinsamen ringförmigen Rohling hergestellt sind, in dem die schwalbenschwanzförmigen Aussparungen (52) Teile einer gemeinsamen Ringnut sind.

7. Werkzeugrevolver nach einem der Ansprüche 1 bis 6,
dadurch gekennzeichnet, daß
- an der Führung (20) in jedem Sektor, in dem ein Werkzeughalter (30) zu befestigen ist, als Justierelement ein um eine radiale Achse (C) dreheinstellbarer Exzenter (70) befestigt ist, und
- jeder Werkzeughalter (30) als Justierelement einen in tangentialer Richtung einstellbaren Anschlag (76) aufweist, der gegen den Exzenter (70) drückbar ist.

8. Werkzeugrevolver nach Anspruch 7,
dadurch gekennzeichnet, daß
- an jedem Werkzeughalter (30), dem Anschlag (76) in tangentialem Abstand gegenüberliegend, ein gegen den Anschlag (76) vorgespannter Spannkörper (78) geführt ist, und
- bei auf die Führung (20) aufgestecktem Werkzeughalter (30) der zugehörige Exzenter (70) zwischen Anschlag (76) und Spannkörper (78) eingespannt ist.

9. Werkzeugrevolver nach Anspruch 8,
dadurch gekennzeichnet, daß der Spannkörper (78) gegenüber dem Exzenter (70) einen solchen Achsversatz (X) aufweist, daß die vom Spannkörper (78) auf den Exzenter (70) ausgeübte Kraft eine zur Revolverachse (A) parallele, den Werkzeughalter (30) gegen die freie Stirnfläche (22) der Führung (20) drückende Komponente (Fₐ) aufweist.

10. Werkzeugrevolver nach einem der Ansprüche 1 bis 9,
dadurch gekennzeichnet, daß in der Führung (20) in jedem Sektor, in dem ein Werkzeughalter (30) zu befestigen ist, gegen den radial nach innen spannbaren Schieber (60) versetzt, ein radial nach innen vorgespanntes Andrückelement (79) geführt ist, das gegen die radial innere Flanke (56) am Fuß (50) des Werkzeughalters (30) drückt.

## Claims

1. A tool turret especially for lathes, comprising
- a hub (10) that is adapted to be indexed about a turret axis (A) in predetermined rotational positions;
- guide means (20) extending in the shape of a circular ring around the turret axis (A), having a trapezoidal guide profile and taking part in the rotations of the hub (10), and
- a plurality of toolholders (30) each of which has a body (32, 34) and a foot (50) by means of which they can be fitted on the guide (20) and then clamped, thereby embracing the guide profile at three sides,
- each toolholder (30) being adjusted in circumferential direction by a pair of cooperating, tangentially settable adjusting elements, one of which is arranged at the toolholder (30) and the other at the guide means (20),
characterized in that
- the guide means (20) has a free front surface (22) pointing in axial direction relative to the turret axis (A) and a cone-shaped outer surface (24) the diameter of which decreases with increasing distance from its free front surface (22);
- the toolholders (30) are adapted to be fitted on the guide means (20) in axial direction;
- a slide (60) adapted to be clamped radially inwardly is guided in the guide means (20) in every sector in which a toolholder (30) is to be mounted, and
- the foot (50) of each toolholder (30) has a dovetailed recess (52) that is defined by a concave-conical radial outer flank (54) abutting the outer surface (24) of the guide means (20), and a convex-conical inner flank (56) against which the slide (60) can be clamped.

2. The tool turret according to claim 1,
characterized in that the body (32, 34) of at least one tool-holder (30) is arranged axially beside the guide means (20) substantially radially to the turret axis (A).

3. The tool turret according to claim 2,
characterized in that
- a sun gear (48) adapted to be driven about the turret axis (A) is arranged on the hub (10), and
- a spindle (40) radial with respect to the turret axis (A) is arranged in the body (34) of at least one toolholder (30), which spindle (40) is provided with a pinion (46) at its radial inner end which gets into engagement with the sun gear (48) as the toolholder (30) is fitted axially on the guide means (20).

4. The tool turret according to claim 3,
characterized in that the guide means (20) together with the toolholders (30) mounted to it is adapted to be detached from the hub (10) in axial direction, whereas the sun gear (48) maintains its position relative to the hub (10).

5. The tool turret according to claim 4,
characterized in that
- a cup-shaped cover (80) is connected with the guide means (20) which cover (80), with the guide means (20) fixed to the hub (10), surrounds the sun gear (48), and
- every radial spindle (40) that is arranged in the body (34) of a toolholder (30) extends inwardly through a radial opening (82) in the cover (80), so that its pinion (46) is arranged within the cover (80), even if the guide means (20) is detached from the hub (10), as long as the respective toolholder (30) is fastened to the guide means (20).

6. The tool turret according to one of claims 1 to 5,
characterized in that several toolholders (30) are made from a common ring-shaped blank in which the dovetailed recesses (52) are parts of a common annular groove.

7. The tool turret according to one of claims 1 to 6,
characterized in that
- as adjusting element an eccentric (70) rotation-adjustable about a radial axis (C) is fastened on the guide means (20) in every sector in which a toolholder (30) is to be fastened, and
- every toolholder (30) has as adjusting element a stop (76) which is adjustable in tangential direction and adapted to be pressed against the eccentric (70).

8. The tool turret according to claim 7,
characterized in that
- a clamping member (78) biased against the stop (76) is guided on each toolholder (30), opposite the stop (76) and tangentially spaced therefrom, and
- with the toolholder (30) fitted on the guide means (20), the associated eccentric (70) is clamped between the stop (76) and the clamping member (78).

9. The tool turret according to claim 8,
characterized in that the clamping body (78) has an axial displacement (X) with respect to the eccentric (70) such that the force exerted by the clamping member (76) on the eccentric (70) has a component (Fₐ) which is in parallel with the turret axis (A) and urges the toolholder (30) against the free front surface (22) of the guide means (20).

10. The tool turret according to one of claims 1 to 9,
characterized in that a radially inwardly biased contact pressure element (79) is guided in the guide means (20) in each sector in which a toolholder (30) is to be mounted, offset with respect to the slide (60) that is adapted to be clamped radially inwardly, said contact pressure element (79) bearing against the radial inner flank (56) at the foot (50) of the toolholder (20).

## Revendications

1. Tourelle revolver, en particulier pour tours, comprenant
- un moyeu (10) qui peut être enclenché en des positions angulaires prédéterminées autour d'un axe de revolver (A),
- un guide (20) qui s'étend en forme d'anneau autour de l'axe de revolver (10), présente un profil de guidage en forme de trapèze et participe aux rotations du moyeu (10), et
- plusieurs porte-outils (30) qui présentent chacun un corps (32, 34) et chacun un pied (50) avec lequel ils peuvent, en enveloppant le profil de guidage sur trois côtés, être montés et ensuite bloqués sur le guide (20),
- chaque porte-outil (30) étant ajusté dans la direction périphérique par une paire d'éléments d'ajustement coopérants, réglables tangentiellement dont l'un est disposé sur le porte-outil et l'autre sur le guide (20),
caractérisée en ce que
- le guide (20) présente une face frontale libre (22) dirigée axialement par rapport à l'axe de revolver (A) et une surface extérieure conique (24) dont le diamètre décroît en s'éloignant de sa face frontale libre,
- les porte-outils (30) peuvent être montés en direction axiale sur le guide (20),
- dans le guide (20) un coulisseau (60) pouvant être poussé radialement vers l'intérieur est guidé dans chaque secteur dans lequel un porte-outil (30) doit être fixé, et
- le pied (50) de chaque porte-outil (30) présente un évidement en forme de queue d'aronde (52) qui est délimité par un flanc (54) conique-concave radialement extérieur, qui s'applique à la surface extérieure (24) du guide (20), et un flanc (56) conique-convexe intérieur contre lequel le coulisseau (60) peut être pressé.

2. Tourelle revolver selon la revendication 1,
caractérisée en ce que le corps (32, 34) d'au moins un porte-outil (30) est disposé axialement à côté du guide (20) sensiblement radialement par rapport à l'axe de revolver (A).

3. Tourelle revolver selon la revendication 2,
caractérisée en ce que
- une roue dentée centrale (48) pouvant être entraînée en rotation autour de l'axe de revolver (A) est montée tournante sur le moyeu (10), et
- une broche (40) radiale par rapport à l'axe de revolver (A) est montée tournante dans le corps (34) d'au moins un porte-outil (30), laquelle broche présente à son extrémité radiale intérieure un pignon (46) qui, lors du montage axial du porte-outil (30) sur le guide (20), vient en prise avec la roue dentée centrale (48).

4. Tourelle revolver selon la revendication 3,
caractérisée en ce que le guide (20) peut être libéré en direction axiale du moyeu (10) avec tous les porte-outils (30) qui y sont fixés, tandis que la roue dentée centrale (48) conserve sa position par rapport au moyeu (10).

5. Tourelle revolver selon la revendication 4,
caractérisée en ce que
- un chapeau (80) en forme de pot, qui entoure la roue dentée centrale (48) lorsque le guide (20) est fixé au moyeu (10), est relié au guide (20), et
- chaque broche radiale (40) qui est montée tournante dans le corps (34) d'un porte-outil (30) s'étend vers l'intérieur à travers une ouverture radiale (82) du chapeau (80) de telle façon que son pignon (46) soit disposé à l'intérieur du chapeau (80) même lorsque le guide (20) est démonté du moyeu (10) tant que le porte-outil (30) concerné est fixé au guide (20).

6. Tourelle revolver selon l'une quelconque des revendications 1 à 5,
caractérisée en ce que plusieurs porte-outils (30) sont fabriqués à partir d'une seule ébauche commune annulaire dans laquelle les évidements en forme de queue d'aronde (52) sont des parties d'un rainure annulaire commune.

7. Tourelle revolver selon l'une quelconque des revendications 1 à 6,
caractérisée en ce que
- un excentrique (70) servant d'élément d'ajustement pouvant être réglé angulairement autour d'un axe radial (C) est fixé sur le guide (20) dans chaque secteur dans lequel un porte-outil (30) doit être fixé, et
- chaque porte-outil (30) présente comme élément d'ajustement un arrêt (76) pouvant être réglé en direction tangentielle qui peut être pressé contre l'excentrique (70).

8. Tourelle revolver selon la revendication 7,
caractérisée en ce que
- sur chaque porte-outil (30) un corps de serrage (78) poussé en permanence contre l'arrêt (76) est guidé opposé à et espacé tangentiellement de l'arrêt (76), et
- lorsque le porte-outil (30) est monté sur le guide (20), l'excentrique associé (70) est serré entre l'arrêt (76) et le corps de serrage (78).

9. Tourelle revolver selon la revendication 8,
caractérisée en ce que le corps de serrage (78) présente par rapport à l'excentrique (70) un décalage axial (X) tel que la force exercée par le corps de serrage (78) sur l'excentrique (70) présente une composante (Fₐ) parallèle à l'axe de revolver (A) pressant le porte-outil (30) contre la face frontale libre (22) du guide (20).

10. Tourelle revolver selon l'une quelconque des revendications 1 à 9,
caractérisée en ce qu'un élément presseur (79) poussé en permanence radialement vers l'intérieur, décalé par rapport au coulisseau (60) pouvant être poussé radialement vers l'intérieur, est guidé dans le guide (20) dans chaque secteur dans lequel un porte-outil (30) doit être fixé, lequel élément presseur presse contre le flanc intérieur (56) sur le pied (50) du porte-outil (30).
